(19) Europäisches Patentamt / European Patent Office / Office européen des brevets

(11) **EP 4 386 443 A1**

(12) **EUROPEAN PATENT APPLICATION**

(43) Date of publication:
**19.06.2024   Bulletin 2024/25**

(21) Application number: **23180709.0**

(22) Date of filing: **21.06.2023**

(51) International Patent Classification (IPC):
**G01S 13/42** (2006.01)      **G01S 13/931** (2020.01)

(52) Cooperative Patent Classification (CPC):
**G01S 13/42; G01S 13/931**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.12.2022   KR 20220173272**

(71) Applicant: **Samsung Electronics Co., Ltd.
Suwon-si, Gyeonggi-do 16677 (KR)**

(72) Inventors:
• **KHANG, Seung Tae**
  **16678 Suwon-si (KR)**
• **JEON, Jinyong**
  **16678 Suwon-si (KR)**
• **CHOI, Sungdo**
  **16678 Suwon-si (KR)**
• **KIM, Jong-Sok**
  **16678 Suwon-si (KR)**
• **CHO, Young Rae**
  **16678 Suwon-si (KR)**

(74) Representative: **Arnold & Siedsma
Bezuidenhoutseweg 57
2594 AC The Hague (NL)**

(54) **METHOD AND APPARATUS WITH RADAR SIGNAL PROCESSING BACKGROUND**

(57)   A processor implement method including: determining a target azimuth angle of the target object based on an initial radar signal received through an array antenna of a radar sensor, generating a correction radar signal by correcting a phase of the initial radar signal based on the target azimuth angle, and determining an elevation angle of the target object based on the correction radar signal.

FIG. 1

EP 4 386 443 A1

**Description**

BACKGROUND

1. Field

The following description relates to a method and apparatus with radar signal processing.

2. Description of Related Art

Advanced driver-assistance system (ADAS) may support driving to improve a driver's safety and convenience and help to avoid dangerous situations by using sensors mounted inside or outside a vehicle.

Typically, the sensors used in an ADAS may include, for example, a camera, an infrared sensor, an ultrasonic sensor, a light detection and ranging (lidar), and a radar, for example. Compared to other sensors, the radar device may be better at stably measuring an object in a vicinity of a vehicle in various environmental or weather conditions around the vehicle. Typical radar systems employed in a typical ADAS try to provide both the elevation and azimuth information using a non-uniform or overlapping arrays of antenna elements within the radar system.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a general aspect, here is a method including determining a target azimuth angle of a target object, based on an initial radar signal received through an array antenna of a radar sensor, generating a correction radar signal by correcting a phase of the initial radar signal, based on the target azimuth angle, and determining an elevation angle of the target object, based on the correction radar signal.

The initial radar signal may be a signal generated based on a virtual array antenna generated by the array antenna.

The virtual array antenna generated by the array antenna may include a first virtual antenna element set aligned with a first axis and a second virtual antenna element set aligned with a second axis that is parallel to the first axis.

The antenna array may include a first transmission antenna element set aligned with a first axis, a second transmission antenna element set aligned with a second axis that is parallel to the first axis, and a first reception antenna element set aligned with a third axis that is parallel to the first axis and the second axis.

The first transmission antenna element set may include a first transmission antenna sub-element and a second transmission antenna sub-element, the second transmission antenna element set may include a third transmission antenna sub-element and a fourth transmission antenna sub-element, and the first transmission antenna sub-element, the second transmission antenna sub-element, the third transmission antenna sub-element, and the fourth transmission antenna sub-element may be arranged in a zigzag form along the first axis and the second axis.

The third transmission antenna sub-element may be arranged on the second axis to be parallel to a portion of the first transmission antenna sub-element arranged on the first axis and a portion of the second transmission antenna sub-element arranged on the first axis.

The first reception antenna element set may include a first reception antenna sub-element and a second reception antenna sub-element, and a distance between a center of the first reception antenna sub-element and a center of the second reception antenna sub-element is greater than or equal to a length of the first reception antenna sub-element.

The array antenna may include a first reception antenna element set aligned with a first axis, a second reception antenna element set aligned with a second axis that is parallel to the first axis, and a first transmission antenna element set aligned with a third axis that is parallel to the first axis and the second axis.

The first reception antenna element set may include a first reception antenna sub-element and a second reception antenna sub-element, the second reception antenna element set may include a third reception antenna sub-element and a fourth reception antenna sub-element, and the first reception antenna sub-element, the second reception antenna sub-element, the third reception antenna sub-element, and the fourth reception antenna sub-element may be arranged in a zigzag form along the first axis and the second axis.

The third reception antenna sub-element may be arranged on the second axis to be parallel to a portion of the first reception antenna sub-element arranged on the first axis and a portion of the second reception antenna sub-element arranged on the first axis.

The first transmission antenna element set may include a first transmission antenna sub-element and a second transmission antenna sub-element and a distance between a center of the first transmission antenna sub-element and a center of the second transmission antenna sub-element is greater than or equal to a length of the first transmission antenna sub-element.

The array antenna may include a first reception antenna element set aligned with a first axis, a second reception antenna element set aligned with a second axis that is parallel to the first axis, and a first transmission antenna element set aligned with a third axis that is parallel to the first axis and the second axis.

In a general aspect, here is provided an apparatus including a processor configured to execute instructions and a memory storing the instructions, wherein an execution of the instructions configures the processor to determine a target azimuth angle of a target object, based on an initial radar signal received through an array antenna of a radar sensor, generate a correction radar signal by correcting a phase of the initial radar signal, based on the target azimuth angle, and determine an elevation angle of the target object, based on the correction radar signal.

The initial radar signal may be a signal generated based on a virtual array antenna generated by the array antenna.

The virtual array antenna generated by the array antenna may include a plurality of first virtual antenna elements aligned with a first axis and a plurality of second virtual antenna elements aligned with a second axis that is parallel to the first axis.

The apparatus may include the radar sensor, and the apparatus may be a vehicle.

In a general aspect, here is provided a radar array antenna including a first transmission antenna element set aligned with a first axis, a first reception antenna element set aligned with a second axis that is parallel to the first axis, and a second reception antenna element set aligned with a third axis that is parallel to the first axis and the second axis.

The first reception antenna element set may include a first reception antenna sub-element and a second reception antenna sub-element, the second reception antenna element set may include a third reception antenna sub-element and a fourth reception antenna sub-element, and the first reception antenna sub-element, the second reception antenna sub-element, the third reception antenna sub-element, and the fourth reception antenna sub-element may be arranged in a zigzag form along the second axis and the third axis.

The first transmission antenna element set may include a first transmission antenna sub-element and a second transmission antenna sub-element and a distance between a center of the first transmission antenna sub-element and a center of the second transmission antenna sub-element is greater than or equal to a length of the first transmission antenna sub-element.

In a general aspect, here is provided an apparatus including an antenna array comprising transmission and reception antenna arrays that generate a virtual transmission antenna array and a virtual reception antenna array, and a processor configured to determine an azimuth angle of a target object based on an initial radar signal transmitted by the virtual transmission array and received by the virtual reception array, calculate a phase correction based on the azimuth angle, and determine an elevation angle of the target object based on the calculated phase correction, the transmission array and the reception array being arranged along at least three parallel axes and the virtual transmission array and the virtual reception array being arranged in only two parallel axes.

Other features and aspects will be apparent from the following detailed description, the drawings, and the claims.

According to further aspects of the invention, there are provided a processor-implemented method, apparatuses and a radar arrayed antenna as defined by the following set of clauses:

1. A processor-implemented method, the method comprising:

   determining a target azimuth angle of a target object, based on an initial radar signal received through an array antenna of a radar sensor;
   generating a correction radar signal by correcting a phase of the initial radar signal, based on the target azimuth angle; and
   determining an elevation angle of the target object, based on the correction radar signal.

2. The method of clause 1, wherein the initial radar signal is a signal generated based on a virtual array antenna generated by the array antenna.

3. The method of clause 2, wherein the virtual array antenna generated by the array antenna comprises:

   a first virtual antenna element set aligned with a first axis; and
   a second virtual antenna element set aligned with a second axis that is parallel to the first axis.

4. The method of clause 1, wherein the array antenna comprises:

   a first transmission antenna element set aligned with a first axis;
   a second transmission antenna element set aligned with a second axis that is parallel to the first axis; and

a first reception antenna element set aligned with a third axis that is parallel to the first axis and the second axis.

5. The method of clause 4, wherein the first transmission antenna element set comprises a first transmission antenna sub-element and a second transmission antenna sub-element,

> wherein the second transmission antenna element set comprises a third transmission antenna sub-element and a fourth transmission antenna sub-element, and
> wherein the first transmission antenna sub-element, the second transmission antenna sub-element, the third transmission antenna sub-element, and the fourth transmission antenna sub-element are arranged in a zigzag form along the first axis and the second axis.

6. The method of clause 5, wherein the third transmission antenna sub-element is arranged on the second axis to be parallel to a portion of the first transmission antenna sub-element arranged on the first axis and a portion of the second transmission antenna sub-element arranged on the first axis.

7. The method of clause 4, wherein the first reception antenna element set comprises a first reception antenna sub-element and a second reception antenna sub-element, and
wherein a distance between a center of the first reception antenna sub-element and a center of the second reception antenna sub-element is greater than or equal to a length of the first reception antenna sub-element.

8. The method of clause 1, wherein the array antenna comprises:

> a first reception antenna element set aligned with a first axis;
> a second reception antenna element set aligned with a second axis that is parallel to the first axis; and
> a first transmission antenna element set aligned with a third axis that is parallel to the first axis and the second axis.

9. The method of clause 8, wherein the first reception antenna element set comprises a first reception antenna sub-element and a second reception antenna sub-element,

> wherein the second reception antenna element set comprises a third reception antenna sub-element and a fourth reception antenna sub-element, and
> wherein the first reception antenna sub-element, the second reception antenna sub-element, the third reception antenna sub-element, and the fourth reception antenna sub-element are arranged in a zigzag form along the first axis and the second axis.

10. The method of clause 9, wherein the third reception antenna sub-element is arranged on the second axis to be parallel to a portion of the first reception antenna sub-element arranged on the first axis and a portion of the second reception antenna sub-element arranged on the first axis.

11. The method of clause 8, wherein the first transmission antenna element set comprises a first transmission antenna sub-element and a second transmission antenna sub-element, and wherein a distance between a center of the first transmission antenna sub-element and a center of the second transmission antenna sub-element is greater than or equal to a length of the first transmission antenna sub-element.

12. The method of clause 11, wherein the array antenna comprises:

> a first reception antenna element set aligned with a first axis;
> a second reception antenna element set aligned with a second axis that is parallel to the first axis; and
> a first transmission antenna element set aligned with a third axis that is parallel to the first axis and the second axis.

13. An apparatus, comprising:

> a processor configured to execute instructions; and
> a memory storing the instructions, wherein an execution of the instructions configures the processor to:

>> determine a target azimuth angle of a target object, based on an initial radar signal received through an array antenna of a radar sensor,
>> generate a correction radar signal by correcting a phase of the initial radar signal, based on the target azimuth angle, and
>> determine an elevation angle of the target object, based on the correction radar signal.

14. The apparatus of clause 13, wherein the initial radar signal is a signal generated based on a virtual array antenna generated by the array antenna.

15. The apparatus of clause 14, wherein the virtual array antenna generated by the array antenna comprises:

a plurality of first virtual antenna elements aligned with a first axis; and
a plurality of second virtual antenna elements aligned with a second axis that is parallel to the first axis.

16. The apparatus of clause 15, wherein the apparatus comprises the radar sensor, and wherein the apparatus is a vehicle.

17. A radar array antenna, comprising:

a first transmission antenna element set aligned with a first axis;
a first reception antenna element set aligned with a second axis that is parallel to the first axis; and
a second reception antenna element set aligned with a third axis that is parallel to the first axis and the second axis.

18. The radar array antenna of clause 17, wherein the first reception antenna element set comprises a first reception antenna sub-element and a second reception antenna sub-element, wherein the second reception antenna element set comprises a third reception antenna sub-element and a fourth reception antenna sub-element, and wherein the first reception antenna sub-element, the second reception antenna sub-element, the third reception antenna sub-element, and the fourth reception antenna sub-element are arranged in a zigzag form along the second axis and the third axis.

19. The array antenna of clause 17, wherein the first transmission antenna element set comprises a first transmission antenna sub-element and a second transmission antenna sub-element, and wherein a distance between a center of the first transmission antenna sub-element and a center of the second transmission antenna sub-element is greater than or equal to a length of the first transmission antenna sub-element.

20. An apparatus, comprising:

an antenna array comprising transmission and reception antenna arrays that generate a virtual transmission antenna array and a virtual reception antenna array; and
a processor configured to:

determine an azimuth angle of a target object based on an initial radar signal transmitted by the virtual transmission array and received by the virtual reception array;
calculate a phase correction based on the azimuth angle; and
determine an elevation angle of the target object based on the calculated phase correction,
wherein the transmission array and the reception array are arranged along at least three parallel axes, and
wherein the virtual transmission array and the virtual reception array are arranged in only two parallel axes.

BRIEF DESCRIPTION OF THE DRAWINGS

FIG. 1 illustrates an example of recognizing a surrounding environment through a method with radar signal processing according to one or more embodiments.

FIG. 2 illustrates an example an apparatus with radar signal processing according to one or more embodiments.

FIG. 3A illustrates an example virtual array antenna according to one or more embodiments.

FIG. 3B illustrates an example direction of arrival (DOA) estimation spectrum measured by using the virtual array antenna of FIG. 3A according to one or more embodiments.

FIG. 4A illustrates an example virtual array antenna according to one or more embodiments.

FIG. 4B illustrates an example of a DOA estimation spectrum measured by using the virtual array antenna of FIG. 4A according to one or more embodiments.

FIG. 5A illustrates example transmission antenna elements according to one or more embodiments.

FIG. 5B illustrates an example virtual array antenna formed by the transmission antenna elements of FIG. 5A and the reception antenna elements of FIG. 5A according to one or more embodiments.

FIG. 6A illustrates example transmission antenna elements according to one or more embodiments.

FIG. 6B illustrates an example of a virtual array antenna formed by the transmission antenna elements of FIG. 6A and the reception antenna elements of FIG. 6A according to one or more embodiments.

FIG. 7 illustrates an example DOA estimation spectrum using the virtual array antenna of FIG. 5B or the virtual array antenna of FIG. 6B according to one or more embodiments.

FIG. 8 illustrates an example azimuth angle and elevation angle of an object with respect to a coordinate system based on a radar antenna surface according to one or more embodiments.

FIG. 9 illustrates an example method of determining an elevation angle of a target object according to one or more embodiments.

FIG. 10 illustrates an example DOA estimation spectrum using an example virtual array antenna according to one or more embodiments.

FIG. 11A illustrates an example DOA estimation spectrum according to one or more embodiments.

FIG. 11B illustrates an example DOA estimation spectrum according to one or more embodiments.

FIG. 12A illustrates example virtual array antennas according to one or more embodiments.

FIG. 12B illustrates example transmission antenna elements according to one or more embodiments.

FIG. 12C illustrates an example virtual array antenna formed by the transmission antenna elements of FIG. 12B and the reception antenna elements of FIG. 12B according to one or more embodiments.

FIG. 13A illustrates an example DOA estimation spectrum according to one or more embodiments.

FIG. 13B illustrates an example DOA estimation spectrum according to one or more embodiments.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

The terminology used herein is for describing various examples only and is not to be used to limit the disclosure. The singular forms "a", "an", and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Due to manufacturing techniques and/or tolerances, variations of the shapes shown in the drawings may occur. Thus, the examples described herein are not limited to the specific shapes shown in the drawings, but include changes in shape that occur during manufacturing.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

Herein, advanced driver-assistance systems (ADAS's) embodiments, e.g., vehicles, ADAS, or other electronic or computing apparatus embodiments, may include radar, and may further include one or more of each of various sensors, such as a camera, an infrared sensor, an ultrasonic sensor, and a light detection and ranging (LiDAR) system, and a radar.

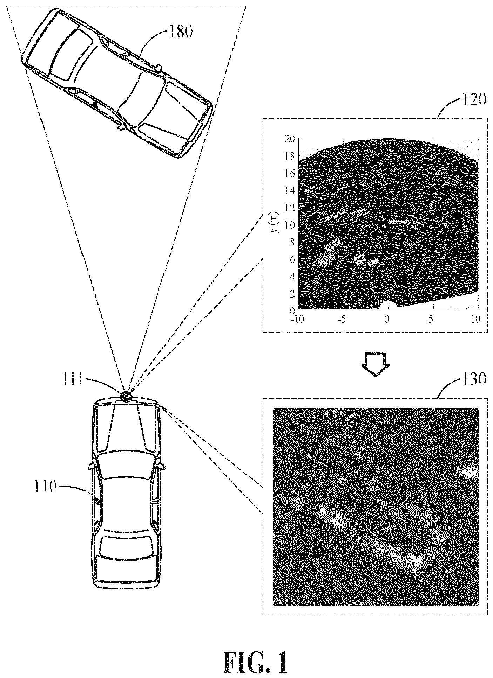

FIG. 1 illustrates an example of recognizing a surrounding environment through a method with radar signal processing according to one or more embodiments.

Referring to FIG. 1, a computing apparatus 110 may detect information (e.g., a range, a velocity, a direction, etc.) on an object 180 ahead by analyzing a radar signal received by a radar sensor 111. The object 180 may be, for example, another vehicle, a pedestrian, or an obstacle in the road. The radar sensor 111 may be inside or outside the computing apparatus 110, and the computing apparatus 110 may detect the information on the object 180 ahead by using data collected by others sensors that are available (e.g., an image sensor, etc.) together with the radar signal received by the radar sensor 111.

Resolving power in radar data processing may be divided into two areas. First, there is a resolving power performance in terms of hardware, and second there is a resolving power performance in terms of software.

In an example, the resolving power refers to the power of a device to discriminate a very small change, for example, a smallest measurable unit of discriminative power, and it may be expressed as "resolving power = (discriminable smallest scale unit) / (total operation range)". The smaller the resolving power value of the device, the more precise results the device may provide. The resolving power value may also be referred to as the resolving power unit. For example, when the device has a small resolving power value, the device may discriminate a relatively small target and may provide results with an increased resolution and an improved precision. When the device has a large resolving power value, the device may not be able to discriminate the small target and thus, its results may necessarily be diminished in its resolution and precision.

The computing apparatus 110 may be mounted on a vehicle as illustrated in FIG. 1. The vehicle may perform adaptive cruise control (ACC), automatic emergency braking (AEB), blind spot detection (BSD), lane change assistance (LCA), and other similar operations, based on the range to the object 180 detected by the computing apparatus 110.

Furthermore, the computing apparatus 110 may generate a surrounding map 130 in addition to detecting the range. The surrounding map 130 may represent positions of various objects around the computing apparatus 110, such as the object 180. A surrounding object may be a dynamic object, such as a vehicle and a human, and may be a static object that is present in a background, such as a guard rail and a traffic light.

To generate the surrounding map 130, a single scan image method may be used. In the single scan image method, the computing apparatus 110 acquires a single scan image 120 from a sensor and generates the surrounding map 130 from the single scan image 120. The single scan image 120 may refer to an image that is generated from a radar signal sensed by a single radar sensor, the radar sensor 111, and may represent ranges, which are indicated by radar signals received from an arbitrary elevation angle, as relatively high resolving power. For example, in the single scan image 120 of FIG. 1, a horizontal axis denotes a steering angle of the radar sensor 111 and a vertical axis denotes a range from the radar sensor 111 to the object 180. However, a form of the single scan image 120 is not limited to that of FIG. 1, and the single scan image 120 may be expressed in a different format depending on a design.

The steering angle may represent an angle corresponding to a target direction from the computing apparatus 110 to the object 180. For example, the steering angle may represent an angle between a heading direction of the computing apparatus 110 (or the vehicle including the computing apparatus 110) and a target direction. In an example, the steering angle is described mainly based on a horizontal angle, but is not limited thereto. In another example, the steering angle may apply to the elevation angle.

In a non-limiting example, the computing apparatus 110 may acquire information about the shape of the object 180 through a multi-radar map. The multi-radar map may be generated from a combination of a plurality of radar scan images. For example, the computing apparatus 110 may generate the surrounding map 130 by spatial-temporally combining radar scan images acquired according to a movement of the radar sensor 111. The surrounding map 130 may be a kind of a radar image map and may be used for pilot parking, for example.

The computing apparatus 110 may use direction of arrival (DOA) information to generate the surrounding map 130. The DOA information refers to information indicating a direction in which a radar signal reflected from the object 180 is received. The computing apparatus 110 may identify a direction in which the object 180 is, based on the radar sensor 111 by using the DOA information. Accordingly, the DOA information may be used to generate radar scan data and the surrounding map 130.

In one example, radar information, such as range, velocity, DOA, and map information, on the object 180 generated by the computing apparatus 110 may be used to control the vehicle equipped with the computing apparatus 110. For example, the type of controlling related to the control of the vehicle may include a velocity and a steering control of the vehicle, such as ACC, AEB, BSD, and LCA. A control system of the vehicle may control the vehicle by directly or indirectly using the radar information. For example, in a scenario where the control is based on a Doppler velocity measurement of an object, the control system may decide to accelerate the vehicle to follow the object or the control system may decide to apply a brake to prevent colliding with the object.

Accordingly, in one or more examples, hardware arrangements may provide improved resolution for both azimuth and elevation data, even in environmental conditions that may undesirably affect reception of radar data.

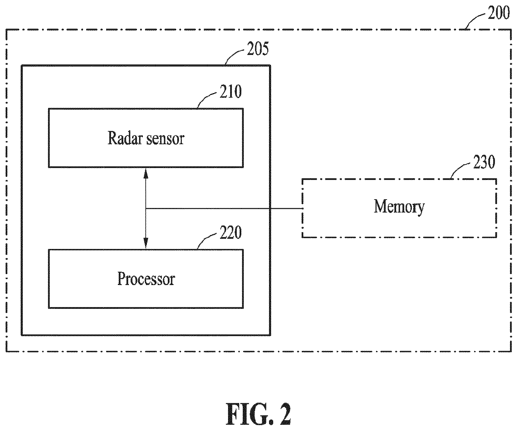

FIG. 2 illustrates an example of a configuration of a vehicle and a computing apparatus with radar signal processing according to one or more embodiments.

Referring to FIG. 2, a vehicle 200 may include a computing apparatus 205, a radar sensor 210, and a processor 220. The radar sensor may be, for example, the radar sensor 111 of FIG. 1 and the computing apparatus 205 may be the computing apparatus 110 of FIG. 1.

The processor 220 may execute programs, and/or may control other operations or functions of the computing apparatus 205, an operation of the radar sensor 210, and operations of the vehicle 200, and may include any one or a combination of two or more of, for example, a central processing unit (CPU), a graphic processing unit (GPU), a neural processing unit (NPU) and tensor processing units (TPUs), but is not limited to the above-described examples.

The memory 230 may include computer-readable instructions. The processor 220 may be configured to execute computer-readable instructions, such as those stored in the memory 230, and through execution of the computer-readable instructions, the processor 220 is configured to perform one or more, or any combination, of the operations and/or methods described herein. The memory 220 may be a volatile or nonvolatile memory.

The radar sensor 210 may radiate a radar signal to an area outside of the radar sensor 210 and may receive a signal, which is based on the radiated radar signal reflected by an object. Here, the radiated radar signal may be referred to as a radar transmission signal, and the received signal may be referred to as a radar reception signal. The radar transmission signal may include a chirp signal which includes a carrier frequency that is modulated based on a frequency modulation model. A frequency of the radar transmission signal may vary within a predetermined band. For example, the frequency of the radar transmission signal may vary linearly within the predetermined band.

The radar sensor 210 may include an array antenna, and through the array antenna, the radar sensor 210 may transmit radar transmission signals and receive radar reception signals. The array antenna may include a plurality of antenna elements. Multiple input multiple output (MIMO) may be implemented through the plurality of antenna elements.

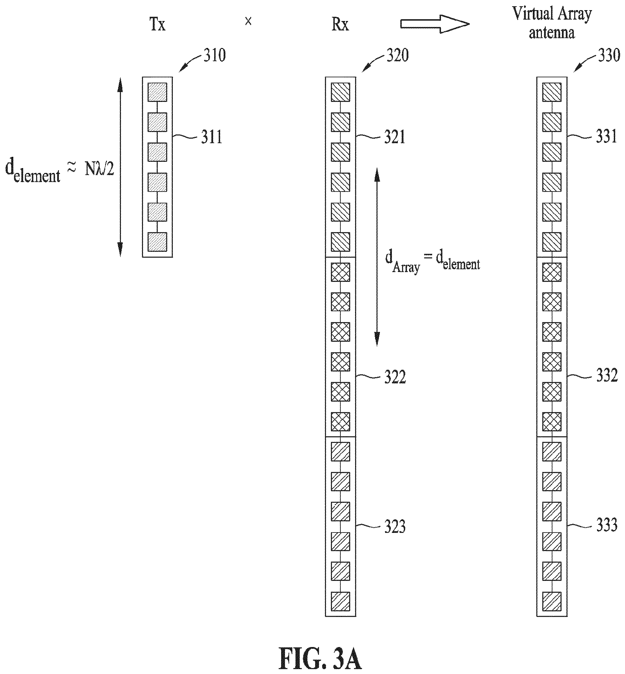

Here, a plurality of MIMO channels may be formed by the plurality of antenna elements. For example, a plurality of channels corresponding to M × N virtual antennas may be formed through M transmission antenna elements and N reception antenna elements. Here, radar reception signals received through the respective channels may have different phases based on the respective directions that they were received, or their reception directions. In an example, the M × N virtual antennas may form a virtual array antenna. Examples of the virtual array antenna is described in greater detail below with reference to FIGS. 3A, 4A, 5B, and 6B.

Radar data may be generated based on the radar transmission signal and the radar reception signal. For example, the radar sensor 210 may transmit the radar transmission signal through the array antenna based on the frequency modulation model, may receive the radar reception signal through the array antenna when the radar transmission signal is reflected by the object, and may generate an intermediate frequency (IF) signal based on the radar transmission signal and the radar reception signal. The IF signal may have a frequency corresponding to a difference between the frequency of the radar transmission signal and the frequency of the radar reception signal. The processor 220 may perform sampling on the IF signal and may generate radar data through a sampling of the results. The radar data may correspond to raw data of an IF.

The processor 220 may generate and use information on the object, based on the radar data. For example, the processor 220 may perform range fast Fourier transform (FFT), Doppler FFT, constant false alarm rate detection (CFAR), and DOA estimation and may obtain the information on the object, such as a range, a velocity, and a direction. The information on the object may be provided for various applications, such as ACC, AEB, BSD, and LCA.

In an example, the frequency of data for vehicle used for autonomous driving may include frequencies within a predetermined band (e.g., 76 - 81 gigahertz (GHz)), and the size of a radar sensor (e.g., the radar sensor 210 of FIG. 2) may be manufactured to be a size that enables efficient use of the frequencies and that is readily mountable on the vehicle. A basic rule for the size of an antenna for efficiently radiating a radar transmission signal may be using a multiple of a half-wave length unit for a wavelength (for example, the wavelength of a signal in a 76 - 81 GHz frequency band is approximately 3.8 millimeter (mm)) of the radar transmission signal, and the antenna may be implemented on a printed circuit board (PCB) to be mounted on the vehicle.

There may be many examples of the types of antennas that may implemented and provided on the PCB. However, an antenna in a patch or monopole form may be used because there is trade-off between a gain of the antenna, where the gain affects a maximum detection range of a radar, and a width of a beam of the antenna.

In a non-limiting example, the antenna may be provided in the patch form which may be adopted as a vehicle antenna which provides a single wave radiating element. The patch form antenna may satisfy a detection range of a mid-range radar (MRR) or a long-range radar (LRR). A plurality of antennas in a patch form may define an antenna element by forming a subarray. The radar sensor's performance may vary depending on an arrangement of one or more antenna elements that are provided in a subarray form for either one of a transmission antenna or a reception antenna.

In an example, a gain of the antenna may increase as a number of wave radiating elements in the antenna elements in a subarray form increases. In an example, a field of view (FoV) with respect to an axis may decrease as a total length of the wave radiating elements arranged along the axis increases. For example, when the wave radiating elements are arranged along an axis of an azimuth angle, a FoV with respect to the azimuth angle may decrease. When the wave radiating elements are arranged along an axis of an elevation angle, a FoV with respect to the elevation angle may likewise decrease.

In an example of a vehicle's radar sensor, the wave radiating elements may be arranged along the axis of the elevation angle to secure the FoV with respect to the azimuth angle, as the FoV with respect to the azimuth angle is relatively more important among the FoV with respect to the azimuth angle and the FoV with respect to the elevation angle. Because the wave radiating elements are arranged lengthwise along the axis of the elevation angle for the sake of the antenna gain in the antenna elements of the radar sensor for the vehicle, some complications may arise in arranging the antenna elements for measuring the elevation angle.

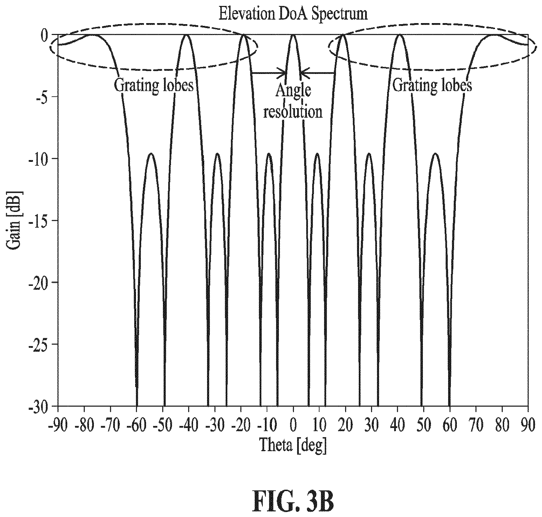

For example, when a virtual array antenna, which may be formed by transmission antenna elements arranged in a column and reception antenna elements arranged in a column, is arranged in a column along the axis of the elevation angle, a grating lobe (GL) may be generated due to an increase in an arrangement spacing among the antenna elements by the length of the respective antenna elements, and a sidelobe level (SLL) may also increase. The virtual array antenna described above and a DOA estimation spectrum on the virtual array antenna are described in greater detail below with reference to FIGS. 3A and 3B.

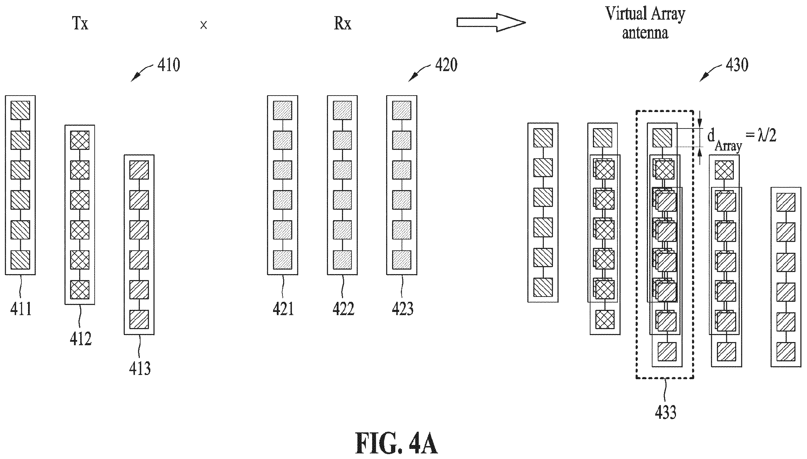

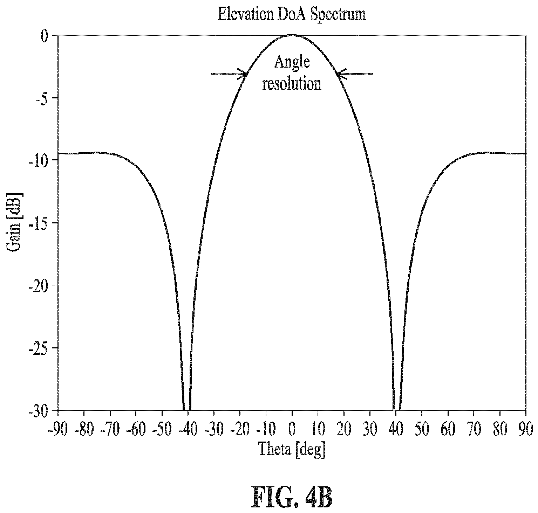

For example, when a virtual array antenna formed by transmission antenna elements arranged in three columns and reception antenna elements arranged in three columns is arranged in five columns along the axis of the elevation angle, a DOA estimation on the elevation angle may be performed by using a virtual array in a column in the middle of the five columns, but a resolution of the estimated DOA may be low. The virtual array antenna described above and a DOA estimation spectrum on the virtual array antenna are described in greater detail below with reference to FIGS. 4A and 4B.

FIG. 3A illustrates an example virtual array antenna according to one or more embodiments. The virtual array antenna may be formed by transmission antenna elements arranged in a column and reception antenna elements arranged in a column.

In a non-limiting example, a transmission antenna 310 may include a first transmission antenna 311, and a reception antenna 320 may include a first reception antenna element 321, a second reception antenna element 322, and a third reception antenna element 323. A length $d_{element}$ of an antenna element may be $N\lambda/2$. N may be the number of wave radiating elements, and $\lambda$ may be the wavelength of a radar transmission signal. A respective distance $d_{Array}$ between first, second, and third reception antenna elements 321, 322, and 323 may be greater than or equal to the length $d_{element}$ of an antenna element.

The transmission antenna 310 and the reception antenna 320 may form a virtual array antenna 330. The virtual array antenna 330 may include virtual antenna elements 331, 332, and 333.

FIG. 3B illustrates an example DOA estimation spectrum measured by using the virtual array antenna of FIG. 3A according to one or more embodiments.

When the virtual array antenna 330 illustrated in FIG. 3A is arranged in a column along an axis of an elevation angle, a GL may be generated due to arrangement spacing among the virtual antenna elements 331, 332, and 333 that is increased by the length of the respective virtual antenna elements 331, 332, and 333, and, in addition, an SLL may also increase. Although an object may be positioned at an elevation angle of 0, an accurate elevation angle of the object may not be measured by the GL according to a DOA estimation spectrum measured by the virtual array antenna 330.

FIG. 4A illustrates an example of a virtual array antenna according to one or more embodiments. In an example, the virtual array antenna may be formed by transmission antenna elements arranged in three columns and reception antenna elements arranged in three columns.

In a non-limiting example, a transmission antenna 410 may include a first transmission antenna element 411 arranged on a first axis, a second transmission antenna element 412 arranged on a second axis, and a third transmission antenna element 413 arranged on a third axis. A reception antenna 420 may include a first reception antenna element 421 arranged on a fourth axis, a second reception antenna element 422 arranged on a fifth axis, and a third reception antenna element 423 arranged on a sixth axis. The first, second, third, fourth, fifth, and sixth axes may be an axis of an elevation angle and may be parallel to one another.

The transmission antenna 410 and the reception antenna 420 may form a virtual array antenna 430. The virtual array antenna 430 may include a plurality of virtual antenna elements. A radar signal received by a plurality of virtual antenna elements 433 in the middle column of the plurality of virtual antenna elements of the virtual array antenna 430 may be used to measure the elevation angle.

FIG. 4B illustrates an example of a DOA estimation spectrum measured by using the virtual array antenna of FIG. 4A according to one or more embodiments.

When the virtual array antenna 430 illustrated in FIG. 4A is arranged in five columns along the axis of the elevation angle, a resolution of the elevation angle to be measured may be low according to a DOA estimation spectrum measured by the plurality of antenna elements 433 in the middle column.

When the shape of an individual antenna element for an MRR and/or LRR for a vehicle is used in a form of extending in a direction of the axis of the elevation angle, an arrangement method of antenna elements may improve the performance of measuring the elevation angle, as the measuring of the elevation angle is sacrificed due to the shape of the antenna elements, and a method of measuring the elevation angle with respect to an object by using the arrangement of the antenna elements may be employed.

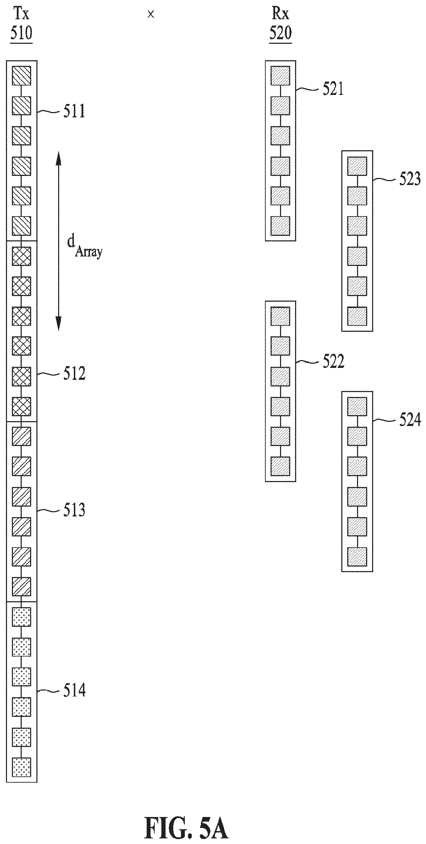

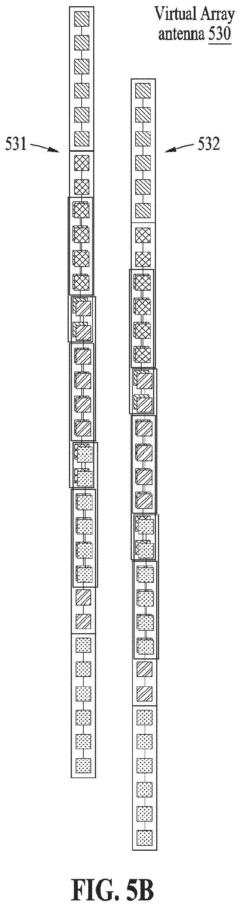

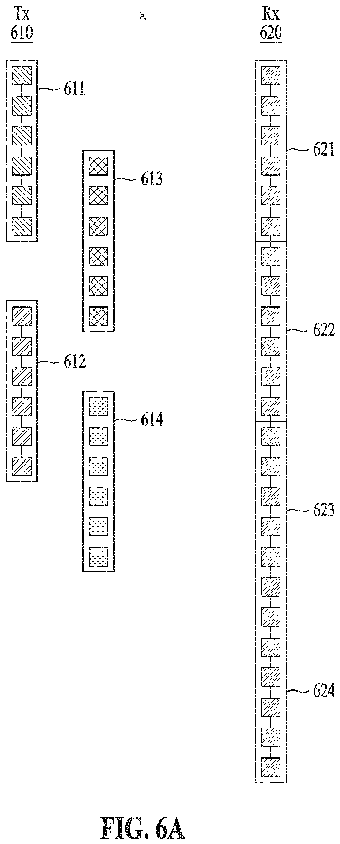

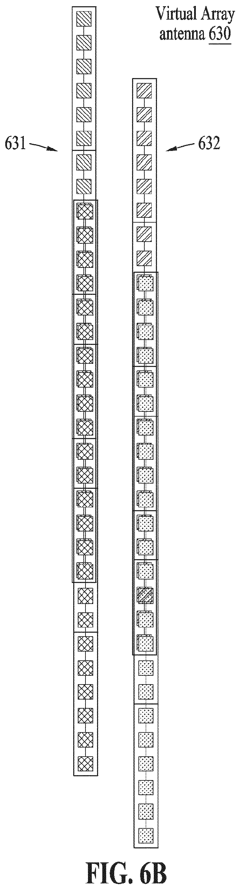

In an example, the arrangement method of the antenna elements to improve the performance of measuring the elevation angle and a virtual array antenna formed based on the arrangement of the antenna elements are described in greater detail below with reference to FIGS. 5A, 5B, 6A, and 6B.

FIG. 5A illustrates an example transmission antenna according to one or more embodiments. The transmission antenna may include elements arranged in a column and reception antenna elements arranged in two columns.

In a non-limiting example, a transmission antenna 510 may include a first transmission antenna element 511, a second transmission antenna element 512, a third transmission antenna element 513, and a fourth transmission antenna element 514 that are arranged on a first axis. A length $d_{element}$ of an antenna element may be $N\lambda/2$. N may be the number (e.g., 6) of wave radiating elements, and $\lambda$ may be the wavelength of a radar transmission signal. A respective distance $d_{Array}$ between first, second, third, and fourth transmission antenna elements 511, 512, 513, and 514 may be greater than or equal to the length $d_{element}$ of an antenna element.

In an example, a reception antenna 520 may include a first reception antenna element 521 and a second reception antenna element 522 that are arranged on a second axis, and a third reception antenna element 523 and a fourth reception antenna element 524 that are arranged on a third axis. For example, a distance between reception antenna elements arranged on the same axis may be greater than the length $d_{element}$ of an antenna element. The first, second, and third axes may be an axis of an elevation angle and may be parallel to one another.

In an example, at least one (e.g., the third reception antenna element 523) of the first, second, third, and fourth reception antenna elements 521, 522, 523, and 524 may be parallel to at least some of at least two reception antenna elements (e.g., the first and second reception antenna elements 521 and 522) arranged on an axis (e.g., the second axis) different from an axis (e.g., the third axis) on which the at least one reception antenna element is arranged. Referring to FIG. 5A, the upper three wave radiating elements of the third reception antenna element 523 may be parallel to the lower three wave radiating elements of the first reception antenna element 521, and the lower one wave radiating element of the third reception antenna element 523 may be parallel to the upper one wave radiating element of the second reception antenna element 522. Although the transmission antenna 510 and the reception antenna 520 are illustrated having a certain number of elements as illustrated within FIG. 5A, the number of transmission antenna elements included by the transmission antenna 510 and/or the number of reception antenna elements included by the reception antenna 520 may vary depending on implementations.

FIG. 5B illustrates an example virtual array antenna formed by the transmission antenna elements of FIG. 5A and the reception antenna elements of FIG. 5A according to one or more embodiments.

The transmission antenna 510 and the reception antenna 520 may form a virtual array antenna 530. The virtual array antenna 530 may include a plurality of virtual antenna elements. The virtual array antenna 530 may include the plurality of virtual antenna elements arranged in two columns by the reception antenna 520 arranged to have two columns 531 and 532. A radar signal received by the plurality of virtual antenna elements arranged in two columns may be used to measure the elevation angle.

FIG. 6A illustrates example transmission antenna elements according to one or more embodiments. The transmission antenna elements may be arranged in two columns and the reception antenna elements may be arranged in a column.

In a non-limiting example, a transmission antenna 610 may include a first transmission antenna element 611 and a second transmission antenna element 612 that are arranged on a first axis and a third transmission antenna element 613 and a fourth transmission antenna element 614 that are arranged on a second axis. For example, a distance between transmission antenna elements arranged on the same axis may be greater than the length $d_{element}$ of an antenna element.

In an example, a reception antenna 620 may include a first reception antenna element 621, a second reception antenna element 622, a third reception antenna element 623, and a fourth reception antenna element 624 that are arranged on a third axis. A respective distance $d_{Array}$ between first, second, third, and fourth reception antenna elements 621, 622, 623, and 624 may be greater than or equal to the length $d_{element}$ of an antenna element.

In an example, at least one (e.g., the third transmission antenna element 613) of the first, second, third, and fourth transmission antenna elements 611, 612, 613, and 614 may be parallel to at least some of at least two transmission antenna elements (e.g., the first and second transmission antenna elements 611 and 612) arranged on an axis (e.g., the first axis) different from an axis (e.g., the second axis) on which the at least one transmission antenna element is arranged. Referring to FIG. 6A, the upper three wave radiating elements of the third transmission antenna element 613 may be parallel to the lower three wave radiating elements of the first transmission antenna element 611, and the lower one wave radiating element of the third transmission antenna element 613 may be parallel to the upper one wave radiating element of the second transmission antenna element 612. Although the transmission antenna 610 and the reception antenna 620 are illustrated as FIG. 6A as having a number of antenna elements, the number of transmission antenna elements included by the transmission antenna 610 and/or the number of reception antenna elements included by the reception antenna 620 may vary depending on implementations.

FIG. 6B illustrates an example virtual array antenna formed by the transmission antenna elements of FIG. 6A and the reception antenna elements of FIG. 6A according to one or more embodiments.

The transmission antenna 610 and the reception antenna 620 may form a virtual array antenna 630. The virtual array antenna 630 may include a plurality of virtual antenna elements. The virtual array antenna 630 may include the plurality of virtual antenna elements arranged in two columns by the transmission antenna 610 and may be arranged to have two columns. A radar signal received by the plurality of virtual antenna elements arranged in two columns may be used to measure the elevation angle.

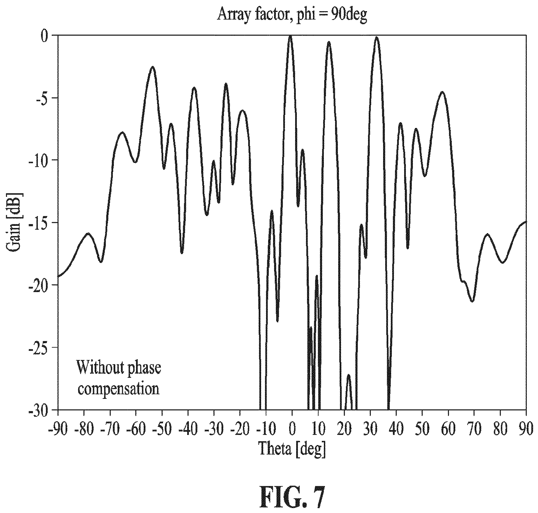

FIG. 7 illustrates an example DOA estimation spectrum measured without a phase correction of an initial radar signal of a target object generated by using the virtual array antenna of FIG. 5B or the virtual array antenna of FIG. 6B according to one or more embodiments.

When designing a virtual array antenna to have multiple columns, such as the virtual array antenna 530 described above with reference to FIG. 5B or the virtual array antenna 630 described above with reference to FIG. 6B, by decreasing a gap between virtual antenna elements arranged on an axis of an elevation angle, the generation of a GL may decrease, the generation of an SLL may decrease, and use efficiency of the virtual antenna elements used to measure the elevation angle may also increase.

A computing device (e.g., a radar signal processing apparatus) may independently estimate an azimuth angle and an elevation angle with respect to an object positioned at a certain azimuth angle and a certain elevation angle by using a radar sensor including an antenna array designed in a form of one-column array along an axis of the azimuth angle and one-column array along an axis of the elevation angle. A DOA of a radar signal reflected from the object may be estimated by comparing phases of the radar signal received by each antenna element.

In an example, when designing an array antenna such that the virtual antenna elements have multiple columns, because a phase component of the azimuth angle of the object derived by a distance difference between columns is added to a reception signal of each column, the elevation angle of the object may not be estimated in the method of independently estimating the azimuth angle and the elevation angle.

For example, to estimate the elevation angle of the object positioned at the azimuth angle of 45 ° and the elevation angle of 15 ° , a radar signal received by using the virtual array antenna 530 described above with reference to FIG. 5B or the virtual array antenna 630 described above with reference to FIG. 6B may be processed in the method of independently estimating the azimuth angle and the elevation angle, and a result thereof may be represented by a DOA estimation spectrum of FIG. 7. Because noise of the phase component of the azimuth angle of the object generated by the multiple columns of the virtual antenna elements is not considered in the above method, it may not be possible to obtain an accurate elevation angle of the object.

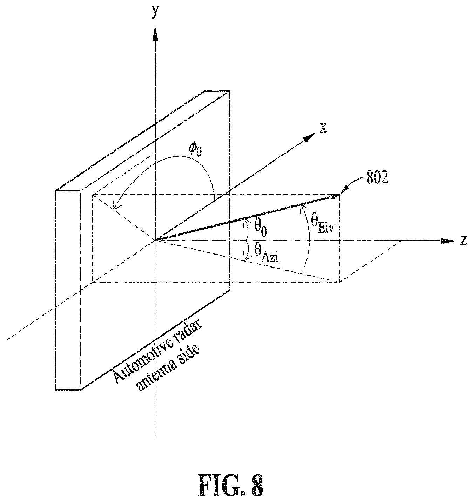

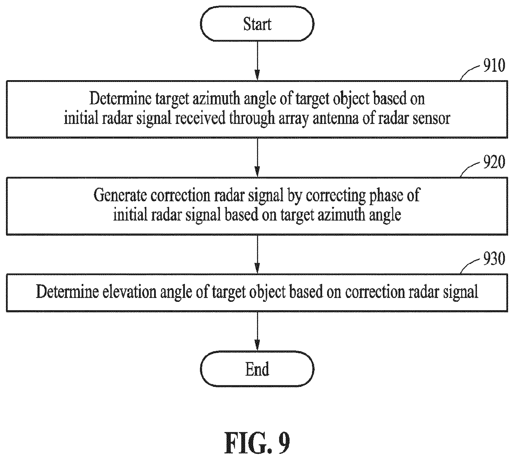

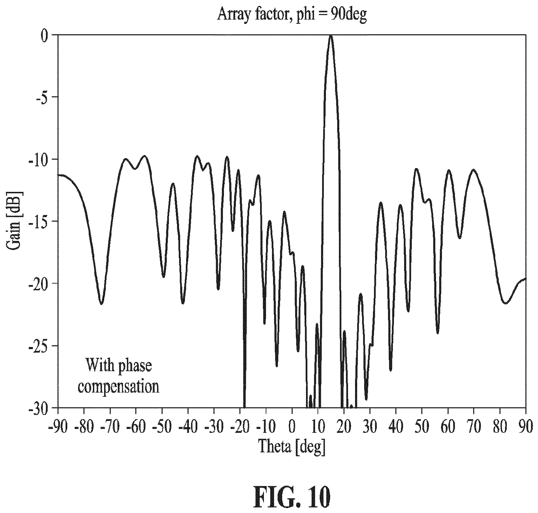

An example of a method of processing a radar signal such that the virtual antenna elements may determine the elevation angle of the object by using the array antenna having multiple columns is described in greater detail below with reference to FIGS. 9 and 10. However, before describing the method of processing the radar signal, a coordinate system for defining the azimuth angle and elevation angle of the object may be described below with reference to FIG. 8.

FIG. 8 illustrates an example azimuth angle and elevation angle of an object with respect to a coordinate system based on a radar antenna surface according to one or more embodiments.

Referring to FIG. 8, in an example, the radar antenna surface may be defined based on a position of a radar sensor including an array antenna. Based on the radar antenna surface, an axis of the azimuth angle may be defined as an x axis, an axis of the elevation angle may be defined as a y axis, and an axis of a distance may be defined as a z axis.

For example, when the object is at specific coordinates 802, $\theta_{Azi}$ is defined as the azimuth angle of the object, and $\theta_{Elv}$ is defined as the elevation angle of the object, $\varphi_0$ and $\theta_0$ may be defined based on $\theta_{Azi}$ and $\theta_{Elv}$.

FIG. 9 illustrates an example method of determining an elevation angle of a target object based on a correction radar signal generated by correcting a phase of an initial radar signal according to one or more embodiments.

Referring to FIG. 9, in a non-limiting example, operations 910 to 930 described below may be performed by a radar signal processing apparatus (e.g., the computing apparatus 205 of FIG. 2).

In operation 910, the radar signal processing apparatus may determine a target azimuth angle of the target object based on the initial radar signal received through an array antenna of a radar sensor (e.g., the radar sensor 210 of FIG. 2). The initial radar signal may be a signal generated based on a virtual array antenna generated by the array antenna.

In an example, the virtual array antenna (e.g., the virtual array antenna 530 of FIG. 5 or the virtual array antenna 630 of FIG. 6) generated by the array antenna may include a plurality of first virtual antenna elements aligned with a first axis and a plurality of second virtual antenna elements aligned with a second axis parallel to the first axis. For example, the length of the first virtual antenna elements in a first axial direction and the length of the second virtual antenna elements in a second axial direction may respectively be at least twice or more than the length of an individual antenna element.

In an example, the array antenna may include a first transmission antenna element set aligned with the first axis, a second transmission antenna element set aligned with the second axis that is parallel to the first axis, and a first reception antenna element set aligned with a third axis that is parallel to the first axis and the second axis. In this example, each of the antenna elements may include sub-elements, for ease of understanding. For example, the first transmission antenna element set may include a first transmission antenna sub-element (e.g., the first transmission antenna element 611 of FIG. 6A) and a second transmission antenna sub-element (e.g., the second transmission antenna element 612 of FIG. 6A), and the second transmission antenna element set may include a third transmission antenna sub-element (e.g., the third transmission antenna element 613 of FIG. 6A) and a fourth transmission antenna sub-element (e.g., the fourth transmission antenna element 614 of FIG. 6A). For example, the first transmission antenna sub-element, the second transmission antenna sub-element, the third transmission antenna sub-element, and the fourth transmission antenna sub-element may be arranged in a zigzag form along the first axis and the second axis. The third transmission antenna sub-element may be arranged on the second axis to be parallel to at least some of the first transmission antenna sub-element arranged on the first axis and at least some of the second transmission antenna sub-element arranged on the first axis. The first reception antenna element set may include a first reception antenna sub-element (e.g., the first reception antenna element 621 of FIG. 6A) and a second reception antenna sub-element (e.g., the second reception antenna element 622 of FIG. 6A), in which a distance between the center of the first reception antenna sub-element and the center of the second reception antenna sub-element may be greater than or equal to the length of the first reception antenna sub-element (or an individual antenna element).

In an example, the array antenna may include a first reception antenna element set aligned with the first axis, a first reception antenna element set aligned with the second axis that is parallel to the first axis, and a second reception antenna element set aligned with the third axis that is parallel to the first axis and the second axis. The first and second reception elements, as discussed below, include various sub-elements. For example, the first reception antenna element set may include the first reception antenna sub-element (e.g., the first reception antenna element 521 of FIG. 5A) and the second reception antenna sub-element (e.g., the second reception antenna element 522 of FIG. 5A), and the second reception antenna element set may include a third reception antenna sub-element (e.g., the third reception antenna element 523 of FIG. 5A) and a fourth reception antenna sub-element (e.g., the fourth reception antenna element 524 of FIG. 5A). For example, the first reception antenna sub-element, the second reception antenna sub-element, the third reception antenna sub-element, and the fourth transmission antenna sub-element may be arranged in a zigzag form along the second axis and the third axis. The first reception antenna sub-element may be arranged on the second axis to be parallel to at least some of the first transmission antenna sub-element arranged on the first axis and at least some of the third reception antenna sub-element arranged on the third axis. The first transmission antenna element set may include the first transmission antenna sub-element (e.g., the first transmission antenna element 511 of FIG. 5A) and the second transmission antenna sub-element (e.g., the second transmission antenna element 512 of FIG. 5A), in which a distance between the center of the first transmission antenna sub-element and the center of the second transmission antenna sub-element may be greater than or equal to the length of the first transmission antenna sub-element (or an individual antenna element).

In a non-limiting example, the radar signal processing apparatus may perform calculations with respect to the initial radar signal received by the virtual array antenna, and determine the target azimuth angle of the target object based on the calculated initial radar signal. For example, the target azimuth angle of the target object may be calculated by using Equation 1.

Equation 1:

$$\mathrm{AF}(\theta, \phi) \sum_{n=1}^{N} e^{jk(x_n \sin\theta \cos\phi + y_n \sin\theta \sin\phi)} \beta \, , \quad \beta = e^{-jk(x_n \sin\theta_0 \cos\phi_0 + y_n \sin\theta_0 \sin\phi_0)}$$

Equation 1 may represent an array factor indicating the feature of a signal received by the virtual array antenna. In Equation 1, N denotes the number of virtual antenna elements, k denotes a wave number, $x_n$ denotes spatial coordinates on an axis of an azimuth angle in the radar sensor of each virtual antenna element, and $y_n$ denotes spatial coordinates on an axis of an elevation angle in the radar sensor of each virtual antenna element. $\theta_0$ and $\varphi_0$ respectively denote angles at which a signal reflected from the target object is received by the radar sensor. Because a distance between the antenna elements in the radar sensor is sufficiently less than a range between the target object and the radar sensor, $\theta_0$ and $\varphi_0$ may be the same with respect to all the antenna elements.

When substituting 0 for $\varphi$ in Equation 1, a spectrum of an azimuth angle of the target object may be obtained, and the target azimuth angle of the target object may be determined (or estimated) by using the spectrum of the azimuth angle of the target object and a DOA estimation method. When using the determined target azimuth angle of the target object and Equation 1, a spectrum of the elevation angle of the target object may be represented by Equation 2.

Equation 2:

$$\mathrm{Spectrum}_{Elv}(\theta) = \sum_{n=1}^{N} e^{jk[y_n \sin\theta - y_n \sin\theta_0 \sin\phi_0 - x_n \sin\theta_0 \cos\phi_0]}$$

In operation 920, the radar signal processing apparatus may generate a correction radar signal by correcting a phase of the initial radar signal based on the target azimuth angle.

A phase of the initial radar signal may be corrected in order to determine the elevation angle of the target object by using the virtual array antenna having multiple columns. To accurately correct the phase of the initial radar signal, both the azimuth angle and elevation angle of the target object may be required. Although the phase of the initial radar signal may require correcting in order to determine the elevation angle, the elevation angle may first be required to correct the phase of the initial radar signal, and accordingly, in this example, the problem may not be solved. In other words, the problem may not be solved through Equation 2.

In an example, a FoV of the radar sensor with respect to the elevation angle may be relatively narrower than a FoV of the radar sensor with respect to the azimuth angle. When the FoV of the radar sensor with respect to the elevation angle is narrow, because an effect of the elevation angle of the target object on the phase of the initial radar signal is small, the phase of the initial radar signal may simply be corrected by using the target azimuth angle of the target object. A correction component for correcting the phase of the initial radar signal may be defined by Equation 3. The correction component of Equation 3 may be a component defined to solve the problem derived from $-x_n \sin \theta_0 \cos \phi_0$ from Equation 2.

Equation 3:

$$\beta_{comp} = e^{jk x_n \sin \theta_{0,comp} \cos \phi_{0,comp}}$$

In Equation 3, $\theta_{0,comp}$ and $\phi_{0,comp}$ respectively denote estimated angles with respect to $\theta_0$ and $\phi_0$. As the effect of the elevation angle of the target object on the phase of the initial radar signal is small, a relationship as defined in Equation 4 below may be established.

Equation 4:

$$\sin \theta_{0,comp} \cos \phi_{0,comp} = -\sin \theta_{Azi} \cos \theta_{Elv} \approx -\sin \theta_{Azi} \text{ for small } \theta_{Elv}$$

In addition, a correction component $\beta_{comp}$ may be approximated as shown below in Equation 5 with respect to Equation 3 and Equation 4.

Equation 5:

$$\beta_{comp} \approx -\sin \theta_{Azi}$$

The spectrum of the elevation angle of the target object may be transformed to Equation 6 by using Equation 2 and Equation 5.

Equation 6:

$$\mathbf{Spectrum}_{Elv,comp}(\boldsymbol{\theta}) = \mathbf{Spectrum}_{Elv}\boldsymbol{\beta}_{comp}$$

$$= \sum_{n=1}^{N} e^{jk[y_n(\sin\theta - \sin\theta_0 \sin\phi_0) - x_n(\sin\theta_0 \cos\phi_0 + \sin\theta_{Azi})]}$$

In operation 930, the radar signal processing apparatus may determine the elevation angle of the target object based on the correction radar signal. For example, the radar signal processing apparatus may determine the elevation angle of the target object by using Equation 6 and the DOA estimation method.

FIG. 10 illustrates an example DOA estimation spectrum measured after performing a phase correction on an initial radar signal generated for a target object by using an example virtual array antenna, such as the antenna of FIG. 5B, or an example virtual array antenna, such as the antenna of FIG. 6B according to one or more embodiments.

For example, to estimate an elevation angle of an object positioned at an azimuth angle of 45 ° and the elevation angle of 15 ° , an initial radar signal received by using the virtual array antenna 530 described above with reference to FIG. 5B or the virtual array antenna 630 described above with reference to FIG. 6B may be corrected, and a result thereof based on a correction radar signal may be represented by a DOA estimation spectrum of FIG. 10. From a comparison of the DOA estimation spectrum of FIG. 7 with the DOA estimation spectrum of FIG. 10, where both FIGs. 7 and 10 illustrate a same radar scenario, it may be apparent that the DOA estimation spectrum as illustrated in FIG. 10, in which the phase of the initial radar signal is corrected, may generate a more accurate result than the DOA estimation spectrum illustrated in FIG. 7.

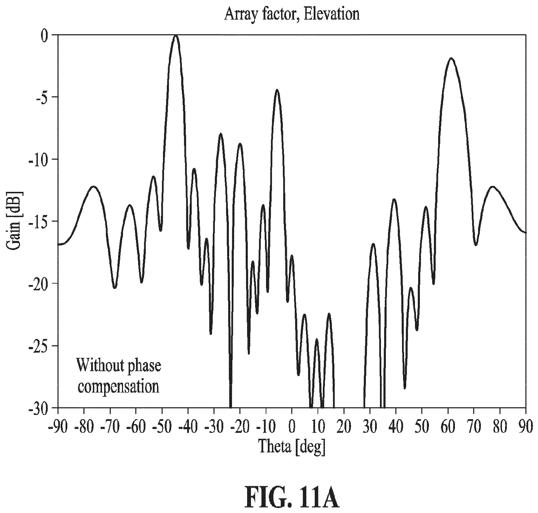

FIG. 11A illustrates an example DOA estimation spectrum measured without a phase correction of an initial radar signal generated for two target objects by using virtual array antennas arranged in two columns according to one or more embodiments.

For example, to estimate an elevation angle of a first object positioned at an azimuth angle of 45 ° and the elevation angle of -5 ° and to estimate an elevation angle of a second object positioned at an azimuth angle of -30 ° and the elevation angle of 15 ° , a radar signal received through a virtual array antenna (e.g., a virtual array antenna of which the total number of virtual antenna elements is 28) arranged in two columns similar to the virtual array antenna 530 described above with reference to FIG. 5B or the virtual array antenna 630 described above with reference to FIG. 6B may be processed in a method of independently estimating an azimuth angle and elevation angle of the received radar signal, and a result thereof may be represented by a DOA estimation spectrum as illustrated in FIG. 11A. Because noise of a phase component of an azimuth angle of an object generated by multiple columns of the virtual antenna elements is not considered in the above method, accurate elevation angles of the first and second objects may not be estimated.

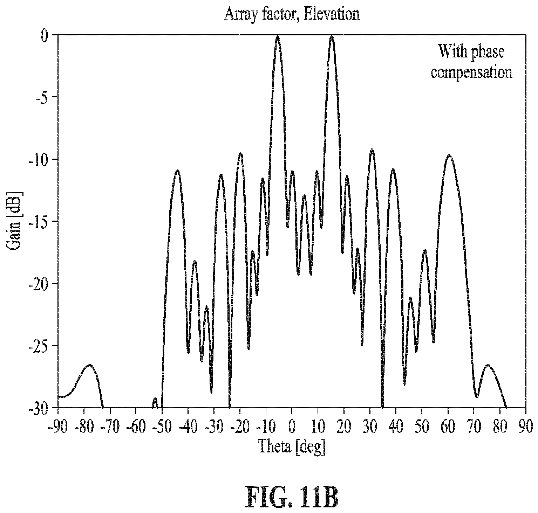

FIG. 11B illustrates an example DOA estimation spectrum measured after performing a phase correction on an initial radar signal generated for two target objects by using virtual array antennas arranged in two columns according to one or more embodiments.

For example, to estimate an elevation angle of a first object positioned at an azimuth angle of 45 ° and the elevation angle of -5 ° and to estimate an elevation angle of a second object positioned at an azimuth angle of -30 ° and the elevation angle of 15 ° , a radar signal received by using a virtual array antenna (e.g., a virtual array antenna of which the total number of virtual antenna elements is 28) arranged in two columns similar to the virtual array antenna 530 described above with reference to FIG. 5B or the virtual array antenna 630 described above with reference to FIG. 6B may be corrected, and a result thereof based on a correction radar signal may be represented by a DOA estimation spectrum of FIG. 11B. From a comparison of the DOA estimation spectrum of FIG. 11A with the DOA estimation spectrum of FIG. 11B, where both FIGs. 11A and 11B illustrate a same radar scenario, it may be apparent that the DOA estimation spectrum illustrated in FIG. 11B, in which the phase of the radar signal is corrected, may generate a more accurate result than the DOA estimation spectrum as illustrated in FIG. 11A.

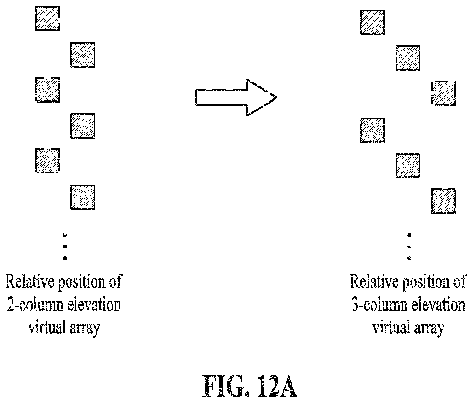

FIG. 12A illustrates example virtual array antennas according to one or more embodiments. One example of the virtual array antennas may be arranged in two columns and another example of the virtual array antennas may be arranged in three columns.

Although embodiments of the virtual array antennas arranged in two columns are described with reference to FIGS. 5A to 11B, the descriptions provided with reference to FIGS. 5A to 11B may uniformly or similarly apply to the virtual array antennas arranged in three columns.

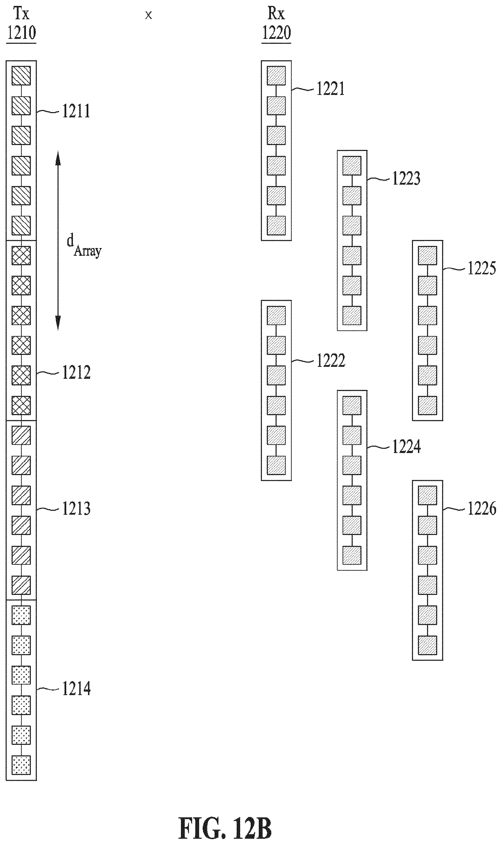

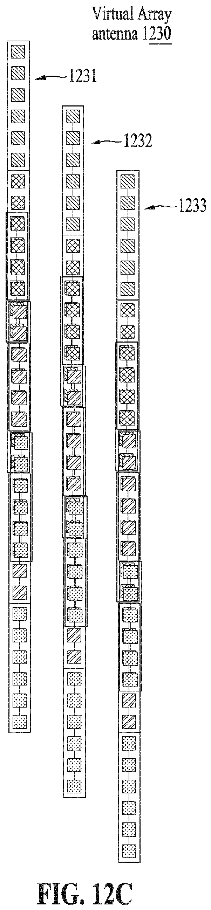

In a non-limiting example, antenna elements of a transmission antenna in two columns or reception antenna in two columns for the virtual array antennas arranged in two columns may be arranged in a zigzag form along a first axis and a second axis. Similar to the above arrangement, antenna elements of a transmission antenna in three columns or reception antenna in three columns for the virtual array antennas arranged in three columns may be arranged on the first axis, the second axis, and a third axis. The antenna elements of the reception antenna in three columns for the virtual array antennas arranged in three columns are described in greater detail below with reference to FIGS. 12B and 12C.

FIG. 12B illustrates example transmission antenna elements according to one or more embodiments. The transmission antenna elements may be arranged in a column and the reception antenna elements may be arranged in three columns.

In a non-limiting example, a transmission antenna 1210 may include a first transmission antenna element 1211, a second transmission antenna element 1212, a third transmission antenna element 1213, and a fourth transmission antenna element 1214 that are arranged on a first axis. A length $d_{element}$ of an antenna element may be $N\lambda/2$. N may be the number (e.g., 6) of wave radiating elements, and $\lambda$ may be the wavelength of a radar transmission signal. A respective distance $d_{Array}$ between first, second, third, and fourth transmission antenna elements 1211, 1212, 1213, and 1214 may be greater than or equal to the length $d_{element}$ of an antenna element.

In an example, a reception antenna 1220 may include a first reception antenna element 1221 and a second reception antenna element 1222 that are arranged on a second axis, a third reception antenna element 1223 and a fourth reception antenna element 1224 that are arranged on a third axis, and a fifth reception antenna element 1225 and a sixth reception antenna element 1226 that are arranged on a fourth axis. For example, a distance between reception antenna elements arranged on the same axis may be greater than the length $d_{element}$ of an antenna element. The first, second, third, and fourth axes may be an axis of an elevation angle and may be parallel to one another.

In an example, at least one (e.g., the third reception antenna element 1223) of the first, second, third, fourth, fifth, and sixth reception antenna elements 1221, 1222, 1223, 1224, 1225, and 1226 may be parallel to at least some of at least two reception antenna elements (e.g., the first and second reception antenna elements 1221 and 1222) arranged on a different axis (e.g., the second and fourth axes) adjacent to an axis (e.g., the third axis) on which the at least one reception antenna element is arranged. Although a number of the transmission antenna 1210 and the reception antenna 1220 elements are illustrated as FIG. 12B, the number of transmission antenna elements included by the transmission antenna 1210 and/or the number of reception antenna elements included by the reception antenna 1220 may vary depending on implementations.

FIG. 12C illustrates an example virtual array antenna formed by the transmission antenna elements of FIG. 12B and the reception antenna elements of FIG. 12B according to one or more embodiments.

In a non-limiting example, the transmission antenna 1210 and the reception antenna 1220 may form a virtual array antenna 1230. The virtual array antenna 1230 may include a plurality of virtual antenna elements. The virtual array antenna 1230 may include the plurality of virtual antenna elements arranged in three columns by the reception antenna 1220 arranged to have three columns. A radar signal received by the plurality of virtual antenna elements arranged in three columns may be used to measure the elevation angle.

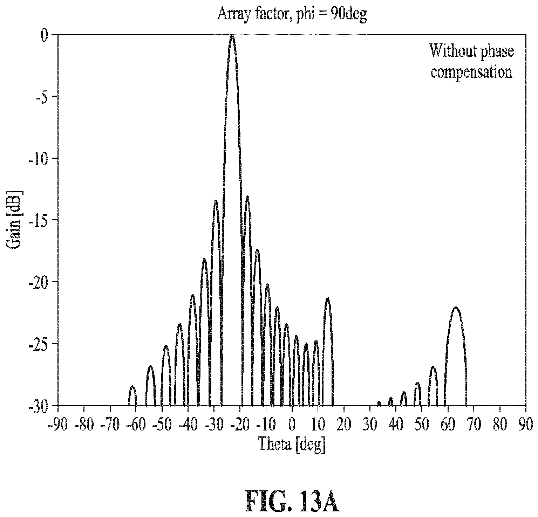

FIG. 13A illustrates an example DOA estimation spectrum measured without a phase correction of an initial radar signal generated for a target object by using virtual array antennas arranged in three columns according to one or more embodiments.

For example, to estimate an elevation angle of an object positioned at an azimuth angle of 45 ° and the elevation angle of 15 °, a radar signal received by using a virtual array antenna (a virtual array antenna of which the total number of virtual antenna elements is 30) arranged in three columns may be processed in a method of independently estimating the azimuth angle and the elevation angle, and a result thereof may be represented by a DOA estimation spectrum as illustrated in FIG. 13A. Because noise of the phase component of the azimuth angle of the object generated by the multiple columns of the virtual antenna elements is not considered in the above method, an accurate elevation angle of the object may not be estimated.

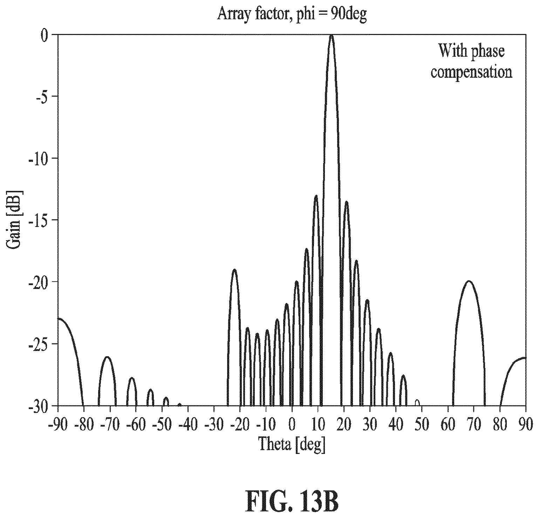

FIG. 13B illustrates an example DOA estimation spectrum measured after performing a phase correction on an initial radar signal generated for a target object by using virtual array antennas arranged in three columns according to one or more embodiments.

For example, to estimate an elevation angle of an object positioned at an azimuth angle of 45 ° and the elevation angle of 15 °, an initial radar signal received by using a virtual array antenna (e.g., a virtual array antenna of which the total number of virtual antenna elements is 30) arranged in three columns may be corrected, and a result thereof based on a correction radar signal may be represented by a DOA estimation spectrum of FIG. 13B. From a comparison of the DOA estimation spectrum of FIG. 13A with the DOA estimation spectrum of FIG. 13B, where each of FIGs. 13A and 13B illustrate a same radar scenario, the DOA estimation spectrum as illustrated in FIG. 13B, in which a phase of the initial radar signal is corrected, may generate a more accurate result than the DOA estimation spectrum as illustrated in FIG. 13A.

The radar systems, processors, memories, vehicles, computing apparatuses, computing apparatus 100, computing apparatus 205, vehicle 200, radar sensor 210, processor 220, and memory 230 described herein and disclosed herein described with respect to FIGS. 1-13B are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-13B that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks , and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is also inclusive of the claims and their equivalents, i.e., all variations within the scope of the claims are to be construed as being included in the disclosure.

## Claims

1.  A processor-implemented method, the method comprising:

    determining a target azimuth angle of a target object, based on an initial radar signal received through an array antenna of a radar sensor;
    generating a correction radar signal by correcting a phase of the initial radar signal, based on the target azimuth angle; and

determining an elevation angle of the target object, based on the correction radar signal.

2. The method of claim 1, wherein the initial radar signal is a signal generated based on a virtual array antenna generated by the array antenna.

3. The method of claim 2, wherein the virtual array antenna generated by the array antenna comprises:

   a first virtual antenna element set aligned with a first axis; and
   a second virtual antenna element set aligned with a second axis that is parallel to the first axis.

4. The method of any one of the previous claims, wherein the array antenna comprises:

   a first transmission antenna element set aligned with a first axis;
   a second transmission antenna element set aligned with a second axis that is parallel to the first axis; and
   a first reception antenna element set aligned with a third axis that is parallel to the first axis and the second axis.

5. The method of claim 4, wherein the first transmission antenna element set comprises a first transmission antenna sub-element and a second transmission antenna sub-element,

   wherein the second transmission antenna element set comprises a third transmission antenna sub-element and a fourth transmission antenna sub-element, and
   wherein the first transmission antenna sub-element, the second transmission antenna sub-element, the third transmission antenna sub-element, and the fourth transmission antenna sub-element are arranged in a zigzag form along the first axis and the second axis.

6. The method of claim 5, wherein the third transmission antenna sub-element is arranged on the second axis to be parallel to a portion of the first transmission antenna sub-element arranged on the first axis and a portion of the second transmission antenna sub-element arranged on the first axis.

7. The method of any one of claims 4-6, wherein the first reception antenna element set comprises a first reception antenna sub-element and a second reception antenna sub-element, and
   wherein a distance between a center of the first reception antenna sub-element and a center of the second reception antenna sub-element is greater than or equal to a length of the first reception antenna sub-element.

8. The method of any one of claims 1-3, wherein the array antenna comprises:

   a first reception antenna element set aligned with a first axis;
   a second reception antenna element set aligned with a second axis that is parallel to the first axis; and
   a first transmission antenna element set aligned with a third axis that is parallel to the first axis and the second axis.

9. The method of claim 8, wherein the first reception antenna element set comprises a first reception antenna sub-element and a second reception antenna sub-element,

   wherein the second reception antenna element set comprises a third reception antenna sub-element and a fourth reception antenna sub-element, and
   wherein the first reception antenna sub-element, the second reception antenna sub-element, the third reception antenna sub-element, and the fourth reception antenna sub-element are arranged in a zigzag form along the first axis and the second axis.

10. The method of claim 9, wherein the third reception antenna sub-element is arranged on the second axis to be parallel to a portion of the first reception antenna sub-element arranged on the first axis and a portion of the second reception antenna sub-element arranged on the first axis.

11. The method of any one of claims 8-10, wherein the first transmission antenna element set comprises a first transmission antenna sub-element and a second transmission antenna sub-element, and
    wherein a distance between a center of the first transmission antenna sub-element and a center of the second transmission antenna sub-element is greater than or equal to a length of the first transmission antenna sub-element.

12. The method of claim 11, wherein the array antenna comprises:

   a first reception antenna element set aligned with a first axis;
   a second reception antenna element set aligned with a second axis that is parallel to the first axis; and
   a first transmission antenna element set aligned with a third axis that is parallel to the first axis and the second axis.

13. An apparatus, comprising:

   a processor configured to execute instructions; and
   a memory storing the instructions, wherein an execution of the instructions configures the processor to:

      determine a target azimuth angle of a target object, based on an initial radar signal received through an array antenna of a radar sensor,
      generate a correction radar signal by correcting a phase of the initial radar signal, based on the target azimuth angle, and
      determine an elevation angle of the target object, based on the correction radar signal.

14. The apparatus of claim 13, wherein the initial radar signal is a signal generated based on a virtual array antenna generated by the array antenna.

15. The apparatus of claim 14, wherein the virtual array antenna generated by the array antenna comprises:

   a plurality of first virtual antenna elements aligned with a first axis; and
   a plurality of second virtual antenna elements aligned with a second axis that is parallel to the first axis;

   preferably wherein the apparatus comprises the radar sensor, and wherein the apparatus is a vehicle.

FIG. 1

**FIG. 2**

Tx     ×     Rx     ⇒     Virtual Array antenna

310

311

320

321

$$d_{element} \approx N\lambda/2$$

$$d_{Array} = d_{element}$$

322

323

330

331

332

333

## FIG. 3A

FIG. 3B

Tx × Rx ⟹ Virtual Array antenna

410   420   430

411   412   413   421   422   423

$d_{Array} = \lambda/2$

433

FIG. 4A

FIG. 4B

**FIG. 5A**

Virtual Array
antenna 530

531

532

FIG. 5B

Tx
610

×

Rx
620

611

613

612

614

621

622

623

624

## FIG. 6A

Virtual Array
antenna 630

631 632

FIG. 6B

Array factor, phi = 90deg

FIG. 7

**FIG. 8**

Start

910

Determine target azimuth angle of target object based on
initial radar signal received through array antenna of radar sensor

920

Generate correction radar signal by correcting phase of
initial radar signal based on target azimuth angle

930

Determine elevation angle of target object based on correction radar signal

End

**FIG. 9**

FIG. 10

Array factor, Elevation

FIG. 11A

FIG. 11B

Relative position of
2-column elevation
virtual array

Relative position of
3-column elevation
virtual array

**FIG. 12A**

FIG. 12B

Virtual Array
antenna 1230

FIG. 12C

**FIG. 13A**

Array factor, phi = 90deg

FIG. 13B

Europäisches
Patentamt

European
Patent Office

Office européen
des brevets

# EUROPEAN SEARCH REPORT

**Application Number**

**EP 23 18 0709**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 634 775 B2 (BOSCH GMBH ROBERT [DE]) 28 April 2020 (2020-04-28) * column 8, line 12 - column 8, line 20; figures 2A, 2B * | 1-15 | INV. G01S13/42 G01S13/931 |
| A | US 2019/310358 A1 (LEE JAE EUN [KR] ET AL) 10 October 2019 (2019-10-10) * paragraph [0171] - paragraph [0172] * | 1-15 | |
| A | US 2015/253419 A1 (ALLAND STEPHEN W [US]) 10 September 2015 (2015-09-10) * paragraph [0040] * | 1-15 | |

**TECHNICAL FIELDS SEARCHED (IPC)**

G01S

The present search report has been drawn up for all claims

| Place of search | Date of completion of the search | Examiner |
|---|---|---|
| Munich | 26 March 2024 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................
& : member of the same patent family, corresponding document

EPO FORM 1503 03.82 (P04C01)

**EP 4 386 443 A1**

## ANNEX TO THE EUROPEAN SEARCH REPORT
## ON EUROPEAN PATENT APPLICATION NO.

EP 23 18 0709

26-03-2024

| Patent document cited in search report | | Publication date | Patent family member(s) | | Publication date |
|---|---|---|---|---|---|
| US 10634775 | B2 | 28-04-2020 | CN | 107076832 A | 18-08-2017 |
| | | | DE | 102014219113 A1 | 24-03-2016 |
| | | | EP | 3198678 A1 | 02-08-2017 |
| | | | JP | 6500109 B2 | 10-04-2019 |
| | | | JP | 2017534881 A | 24-11-2017 |
| | | | US | 2017307744 A1 | 26-10-2017 |
| | | | WO | 2016045938 A1 | 31-03-2016 |
| US 2019310358 | A1 | 10-10-2019 | CN | 110361739 A | 22-10-2019 |
| | | | EP | 3553558 A1 | 16-10-2019 |
| | | | KR | 20190117900 A | 17-10-2019 |
| | | | US | 2019310358 A1 | 10-10-2019 |
| US 2015253419 | A1 | 10-09-2015 | CN | 104901022 A | 09-09-2015 |
| | | | EP | 2916140 A2 | 09-09-2015 |
| | | | US | 2015253419 A1 | 10-09-2015 |

EPO FORM P0459